(19) Europäisches Patentamt
European Patent Office
Office européen des brevets

(11) EP 1 276 806 B1

(12) FASCICULE DE BREVET EUROPEEN

(45) Date de publication et mention de la délivrance du brevet:
**23.01.2008 Bulletin 2008/04**

(21) Numéro de dépôt: **01919553.6**

(22) Date de dépôt: **23.03.2001**

(51) Int Cl.:
***C08K 5/372*** *(2006.01)* ***C08K 5/3435*** *(2006.01)*
***C08L 83/04*** *(2006.01)*

(86) Numéro de dépôt international:
**PCT/FR2001/000884**

(87) Numéro de publication internationale:
**WO 2001/072888 (04.10.2001 Gazette 2001/40)**

# (54) PROCEDE DE STABILISATION DE MOULES EN ELASTOMERE SILICONE

VERFAHREN ZUR STABILISATION VON FORMEN AUS SILIKONELASTOMER

METHOD FOR STABILISING SILICONE ELASTOMER MOULDS

(84) Etats contractants désignés:
**AT BE CH CY DE DK ES FI FR GB GR IE IT LI LU MC NL PT SE TR**

(30) Priorité: **24.03.2000 FR 0003804**

(43) Date de publication de la demande:
**22.01.2003 Bulletin 2003/04**

(73) Titulaire: **Bluestar Silicones France**
**69486 Lyon Cedex 03 (FR)**

(72) Inventeurs:
- **Bressieux, Jérôme**
  **69003 Lyon (FR)**
- **Deforth, Thomas**
  **69007 Lyon (FR)**
- **Pusineri, Christian**
  **69360 Serezin du Rhône (FR)**

(56) Documents cités:
**FR-A- 2 773 165**

- **PATENT ABSTRACTS OF JAPAN vol. 1997, no. 09, 30 septembre 1997 (1997-09-30) & JP 09 118818 A (ASAHI DENKA KOGYO KK), 6 mai 1997 (1997-05-06)**
- **PATENT ABSTRACTS OF JAPAN vol. 016, no. 049 (C-0908), 7 février 1992 (1992-02-07) & JP 03 252447 A (MITSUBISHI RAYON CO LTD), 11 novembre 1991 (1991-11-11)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

## Description

La présente invention a trait à l'utilisation d'additifs pour la stabilisation des élastomères silicones constitutifs de moules, résultant de la réticulation de compositions de polyaddition ou de polycondensation, en particulier de polycondensation.

L'invention a également pour objet des compositions de polyaddition et de polycondensation susceptibles d'être utilisées pour la réalisation de ces élastomères silicones.

L'invention a encore pour objet les moules ainsi obtenus pour la reproduction d'objets décoratifs et industriels par moulage.

Elle a aussi pour objet un procédé de préparation de moules en silicone.

Les compositions silicones, en particulier les compositions silicones de polycondensation, sont utilisées pour la reproduction d'objets décoratifs et industriels par moulage. La reproduction d'objets consiste dans un premier temps à fabriquer un négatif de l'objet à copier. Ce négatif est réalisé en élastomère silicone et se nomme membrane. Après réticulation du silicone, on sépare la membrane de l'objet initial. Cette membrane constitue le moule qui servira à la reproduction de l'objet à copier.

On utilise largement ce type de moule pour la reproduction d'objets en résine, telle que résine de polyester, apte à reproduire fidèlement les détails les plus fins. Mais au cours de cette utilisation, le moule subit des modifications progressives : les constituants des résines polyesters, et en particulier le styrène, diffusent dans la membrane et se polymérisent. La structure physico-chimique du moule au contact des résines évolue : elle durcit progressivement tout en perdant son caractère anti-adhérant et sa résistance au déchirement. Ces modifications conduisent finalement à l'arrachement de fragments superficiels du moule au moment du démoulage de la pièce en polyester. A ce stade, le moule n'est plus utilisable.

Les mécanismes de dégradation mis en jeu sont divers. Ils peuvent dépendre tout aussi bien de critères liés aux élastomères silicones qu'aux résines ou aux conditions de moulage. Il est probable que le mécanisme de polymérisation soit un mécanisme radicalaire : formation de radicaux libres, initiation et propagation de la polymérisation radicalaire du styrène. De hautes teneurs en styrène ou en peroxyde, le caractère exothermique de la polymérisation de la résine et la présence d'oxygène sont des facteurs d'aggravation. La diversité des facteurs pouvant influer sur la dégradation du moule en silicone fait que, jusqu'à ce jour, les solutions proposées n'ont jamais été parfaitement satisfaisantes.

Un moyen d'améliorer la résistance aux résines polyesters d'un moule en silicone consiste à introduire dans l'élastomère des dérivés qui pourront inhiber une ou plusieurs phases de la polymérisation radicalaire.

La demande de brevet européen EP-A-787 766 propose ainsi d'améliorer la longévité des moules en silicone en incorporant à la composition de polycondensation un additif sélectionné dans un groupe constitué de phénols à empêchement stérique, bisphénols à empêchement stérique, thiobisphénols à empêchement stérique, dialkyldithiophosphates de zinc, diaryldithiophosphates de zinc, amines aromatiques, amines à empêchement stérique qui peuvent être des 1-alkylsébaçates à groupement terminal NR.

Dans FR-A-2 773 165, l'additif est choisi dans le groupe consistant en :

- (a) additifs antioxydants contenant dans leur structure au moins un groupe $R-S_q-R'$

dans lequel R et R' sont des groupes hydrocarbonés monovalents ayant au moins 3 atomes de carbone ou un groupe hydrocarboné monovalent ayant une liaison ester, ou R et R' forment ensemble un cycle, q étant un entier compris entre 1 et 3 inclus,

- (b) additifs inhibiteurs de radicaux libres capables, dans les conditions du moulage, de générer au moins un groupe :

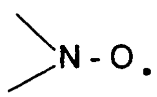

- association synergique (a) + (b),
- association synergique (a) et/ou (b) avec des phosphites (c).

Parmi les additifs de FR-A-2 773 165, on trouve :

- les thiopropionates de formule :

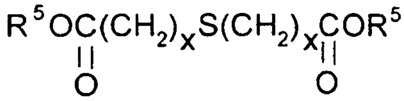

dans laquelle $R^5$ est un groupe alkyle ayant de 1 à 15 atomes de carbone inclus et x est un entier compris entre 1 et 4 inclus, et de préférence les thiodipropionates (x = 2)
parmi lesquels on peut citer :

. ditridécyl thiodipropionate (CAS 10595-72-9)
. distéaryl-3,3'-thiodipropionate (CAS 693-36-7)
. dilauryl-3,3'-thiodipropionate (CAS 123-28-4) ;

- les composés comportant plusieurs groupements thioéther R-Sq-R' reliés à un carbone tétravalent, de préférence tétra(thioéther)pentaérythritol, par exemple tétra(lauryl thiopropionate) pentaérylthritol ou TLPE (CAS 29 598-76-3).

EP-A-854 167 propose plusieurs types d'additifs, dont les phénols stériquement encombrés, les acides thiodipropioniques, les polysulfures, les phosphonates, etc.

Les additifs les plus souvent proposés sont les phénols à empêchement stérique et les acides thiodipropioniques.

De plus, les industriels cherchent à introduire ces additifs en quantité la plus élevée possible, mais se heurtent aux phénomènes d'exsudation de l'additif à l'interface moule - pièce moulée, qui conduit à inhiber la polymérisation de la couche de résine qui est au contact de la surface du moule. Il serait intéressant de disposer d'additifs pouvant être incorporés, sans risques d'exsudation, en quantité suffisante pour assurer un degré de protection élevé.

La déposante a trouvé de manière inattendue que des composés de type thiomonopropionate présentent des avantages remarquables par rapport aux autres additifs connus, y compris par rapport aux thiodipropionates. Les thiomonopropionates permettent d'atteindre des concentrations molaires élevées sans pour autant provoquer des phénomènes d'exsudation et donc d'inhibition à la surface des pièces moulées même après de nombreux moulages consécutifs. Ces additifs peuvent conduire à des performances en termes de nombre de moulages inattendues au vu de ce qui est généralement obtenu avec les additifs classiques, y compris les thiodipropionates.

La présente invention a ainsi pour objet l'utilisation, pour augmenter la longévité des moules en élastomère silicone réticulant par réaction de polyaddition ou de polycondensation, de préférence de polycondensation, d'additif capable de stabiliser l'élastomère silicone constituant le moule, notamment vis-à-vis des matières à mouler, l'additif répondant à la formule (1) suivante :

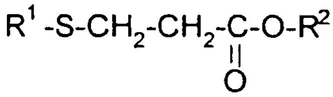

dans laquelle $R^1$ et $R^2$ sont des radicaux alkyles linéaires ou ramifiés ou des radicaux cycloaliphatiques ayant de 1 à 40 atomes de carbone.

Notamment, mais pas exclusivement, pour le moulage d'objets possédant des reliefs de profondeur ou d'épaisseur supérieure ou égale au millimètre et de largeur ou diamètre inférieur à 1 à 5 mm, notamment de plusieurs millimètres, on préfère avoir $R^1 + R^2 > 20$ atomes de C. On a alors un additif solide de type cireux. Il est ainsi possible d'avoir des quantités importantes d'additif dans les reliefs du moule, lequel additif va fondre progressivement au cours des moulages successifs. La condensation maximum en C (nombre de C de $R^1 + R^2$) est avantageusement telle que le point de fusion de l'additif cireux est ≤ 150° C. De préférence, ces additifs cireux ont un point de fusion ≥ 40° C, de préférence compris entre 50 et 120° C environ. A titre d'exemple, le moulage du polyester est exothermique, et la chaleur ainsi libérée permet d'assurer la libération progressive de l'additif.

Notamment, mais pas exclusivement, pour le moulage d'objets ne présentant pas de tels reliefs, ou objets à détails peu marqués, on préfère avoir $R^1 + R^2 \leq 20$ atomes de C, notamment $6 \leq R^1 + R^2 \leq 20$. L'additif est liquide et peut diffuser au cours du temps de manière sensiblement continue, de façon à maintenir une quantité d'additif appropriée dans la couche superficielle du moule au contact de la pièce à mouler. Plus particulièrement, $6 \leq R^1 + R^2 \leq 18$, de préférence $8 \leq R^1 + R^2 \leq 18$, plus préférentiellement encore $10 \leq R^1 + R^2 \leq 18$. $R^1 + R^2 \geq 8$ ou 10 est particulièrement approprié lorsque, comme c'est le cas des résines polyester, la polymérisation de la résine provoque un dégagement de chaleur important ; $R^1 + R^2 \geq 8$ ou 10 permet de limiter les possibilités d'évaporation de l'additif lors des moulages successifs.

Ces différents additifs ont l'avantage toutefois de ne pas exsuder de manière défavorable.

Il convient toutefois de noter que les deux types d'additifs décrits ci-dessus peuvent être utilisés efficacement quelles que soient les particularités de l'objet à mouler.

Suivant une modalité particulièrement avantageuse, on utilise simultanément au moins un additif de chaque type, de manière à bénéficier des particularités et avantages des deux.

A titre d'exemple, $R^1$ peut être $CH_3$, $C_2H_5$, $C_3H_7$, $C_4H_9$, $C_5H_{11}$, $C_6H_{13}$, $C_8H_{17}$, $C_{12}H_{25}$, $C_{16}H_{33}$ ou $C_{18}H_{37}$ ou encore le cyclohexyl $C_6H_{11}$.

A titre d'exemple, $R^2$ est $CH_3$, $C_2H_5$, $C_4H_9$ ou tertiobutyle.

A titre d'exemple préféré, on peut citer le laurylthiopropionate de méthyle ci-après dénommé LTPMe :

$$C_{12}H_{25} - S - CH_2 - CH_2 - CO - O - CH_3.$$

De manière générale, la teneur en poids de l'additif dans la composition silicone totale est comprise entre 0,1 et 15, plus particulièrement entre 0,2 et 10 et de préférence entre 0,5 et 5 %.

Ces dérivés sont particulièrement intéressants dans la mesure où leur affinité pour les élastomères silicones ainsi que leur état physique peuvent être modulés en jouant sur la nature et la condensation en carbone des chaînes alkyles.

Leur mode de synthèse est par ailleurs simple ; ils sont formés par addition d'un alkanethiol sur un acrylate d'alkyle suivant le schéma réactionnel (2) suivant :

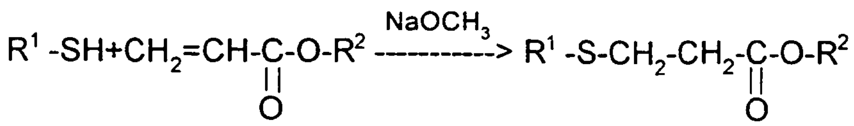


Plus particulièrement, l'invention a pour objet l'utilisation de tels additifs pour la stabilisation des élastomères silicones constitutifs de moules destinés au moulage de pièces en polyester, afin d'empêcher notamment, au sein de l'élastomère silicone, la polymérisation du styrène issu de la résine polyester, sans gêner la polymérisation à coeur et en surface du polyester.

De manière particulièrement préférée, l'utilisation vise à l'obtention d'un nombre de moulages par moule en hausse de plus de 20 %, 50 %, 80%, voire 100 % par rapport à ce qui est généralement obtenu avec les additifs classiques, e.g. les thiodipropionates.

L'invention a aussi pour objet les compositions silicones incorporant un ou plusieurs de ces additifs.

L'invention a aussi pour objet un procédé de préparation de moules en silicone ou d'élastomère silicone susceptible de servir à la réalisation de tels moules, dans lequel, dans une composition silicone précurseur d'élastomère classique, on ajoute un ou plusieurs additifs selon l'invention.

L'ensemble des caractéristiques données ci-après s'applique aux différents objets de l'invention (e.g. utilisation, composition, procédé de préparation).

L'invention peut s'appliquer aux compositions silicone réticulables à température ambiante (la réticulation pouvant être accélérée à chaud) par réaction de polyaddition ou de polycondensation.

La présente invention s'applique notamment aux compositions silicone précurseur d'élastomère silicone, comprenant :

- (A) une huile diorganopolysiloxane présentant des groupes réactifs choisis parmi i) les groupes terminaux condensables, hydrolysables, hydroxy et 2i) les groupes alcényl, de préférence vinyl, liés au silicium ;
- (B) éventuellement un composé choisi dans le groupe consistant en silanes à groupes condensables ou hydrolysables dans le cas où (A) est choisi parmi les groupes i) et en huile diorganopolysiloxane portant des atomes d'hydrogène dans le cas où (A) est choisi parmi les groupes 2i) ;
- (C) un catalyseur ;
- (D) éventuellement tout autre additif usuellement utilisé dans le type de composition considéré ;
- (E) un ou plusieurs additifs selon l'invention.

Un premier groupe de silicones utilisables selon l'invention comprend donc des compositions diorganopolysiloxanes durcissables en un élastomère silicone par des réactions de polycondensation comportant :

- (A) : au moins une huile diorganopolysiloxane portant à chaque extrémité de la chaîne au moins deux groupes condensables ou hydrolysables, ou un seul groupe hydroxy,

- (B) : un silane comportant au moins trois groupes condensables ou hydrolysables, et/ou un produit provenant de l'hydrolyse partielle de ce silane, quand (A) est une huile à extrémités hydroxy,
- (C) un catalyseur de polycondensation de l'huile,
- (E) : un ou plusieurs additifs selon l'invention.

Dans ce qui suit ou ce qui précède, sauf mentions contraires , les pourcentages sont en poids.

Les huiles diorganopolysiloxanes (A) utilisables dans les compositions selon l'invention sont plus particulièrement celles répondant à la formule (3) :

$$Y_nSiR_{3-n}O(SiR_2O)_xSiR_{3-n}Y_n$$

dans laquelle :

- R représente des radicaux hydrocarbonés monovalents identiques ou différents, Y représente des groupes hydrolysables ou condensables (autres que OH) identiques ou différents, ou des groupes hydroxy,
- n est choisi parmi 1, 2 et 3 avec n = 1, quand Y est un hydroxy, et x est un nombre entier supérieur à 1, de préférence supérieur à 10.

La viscosité des huiles de formule (3) est comprise entre 50 et $10^6$ mPa.s à 25°C.

Comme exemples de radicaux R, on peut citer les radicaux alkyl ayant de 1 à 8 atomes de carbone tels que méthyl, éthyl, n-propyl, butyl, hexyl et octyl, les radicaux vinyl, les radicaux phényl.

Comme exemples de radicaux R substitués, on peut citer les radicaux trilfuoro-3,3,3 propyl, chlorophényl et bétacyanoéthyl.

Dans les produits de formule (3) généralement utilisés industriellement, au moins 60 %, de préférence au moins 80 %, en nombre des radicaux R sont des radicaux méthyl, les autres radicaux étant généralement des radicaux phényl et/ou vinyl (notamment au plus 1 %).

Comme exemples de groupes Y hydrolysables, on peut citer les groupes amino, acylamino, aminoxy, cétiminoxy, iminoxy, énoxy, alcoxy, alcoxy-alkylène-oxy, acyloxy et phosphato et, par exemple, parmi ceux-ci :

- pour les groupes Y amino: groupes n-butylamino, sec-butylamino et cyclohexylamino,
- pour les groupes acylamino N substitué : le groupe benzoyl-amino,
- pour les groupes aminoxy : les groupes diméthylaminoxy, diéthylaminoxy, dioctylaminoxy et diphénylaminoxy,
- pour les groupes iminoxy et cétiminoxy : ceux dérivés de l'acétophénone-oxime, l'acétone-oxime, la benzophénone-oxime, la méthyl-éthyl cétoxime, la diisopropylcétoxime et la chlorocyclohexanone-oxime,
- pour les groupes Y alcoxy : les groupes ayant de 1 à 8 atomes de carbone comme les groupes méthoxy, propoxy, isopropoxy, butoxy, hexyloxy et octyloxy,
- pour les groupes Y alcoxy-alkylène-oxy : le groupe méthoxy-éthylène-oxy.
- pour les groupes Y acyloxy : les groupes ayant de 1 à 8 atomes de carbone comme les groupes formyloxy, acétoxy, propionyloxy et éthyl-2 hexanoyloxy,
- pour les groupes Y phosphato : ceux dérivant des groupes phosphates de diméthyle, phosphate de diéthyle et phosphate de dibutyle.

Comme groupes Y condensables, on peut citer les atomes d'hydrogène et les atomes d'halogène, de préférence le chlore.

Les huiles (A) sont de préférence des diorganopolysiloxanes $\alpha,\omega$-dihydroxylés de formule (3) ; alors Y = OH, n = 1 et x est tel que la viscosité est comprise entre 500 et 500 000 mPa.s à 25°C, de préférence entre 800 et 400 000 mPa.s à 25°C .

Ces polymères linéaires sont constitués essentiellement de motifs diorganosiloxyles de formule ($R_2SiO$). Toutefois, la présence d'autres motifs, présents généralement à titre d'impuretés, tels que $RSiO_{3/2}$, $RSiO_{1/2}$ et $SiO_{4/2}$ n'est pas exclue dans la proportion notamment d'au plus 1 % par rapport au nombre de motifs diorganosiloxyles.

A titre illustratif de motifs représentés par la formule $R_2SiO$ peuvent être cités ceux de formules :

$$(CH_3)_2SiO \;;\; CH_3(CH_2{=}CH)SiO \;;\; CH_3(C_6H_5)SiO \;;\; CF_3CH_2CH_2(CH_3)SiO \;;$$

$$NC\text{-}CH_2CH_2(CH_3)SiO \;;\; NC\text{-}CH_2CH_2(C_6H_5)SiO \;;$$

Ces huiles de base sont, dans leur grande majorité, commercialisées par les fabricants de silicones. D'autre part, leurs techniques de fabrication sont bien connues ; on les trouve décrites par exemple dans les brevets français

FR-A-1 134 005, FR-A-1 198 749, FR-A-1 226 745.

Quand dans la formule (3) les groupes Y sont des groupes hydroxy, n est alors égal à 1 et il est nécessaire, pour préparer des élastomères polyorganosiloxanes à partir de ces polymères de formule (3), d'utiliser, en plus des catalyseurs de condensation, des agents réticulants (B) qui sont des silanes de formule générale :

$$R_{4-a}SiY'_a \qquad (4)$$

dans laquelle :

R a les significations données plus haut à la formule (3), Y' représente des groupes hydrolysables ou condensables, identiques ou différents, et a est égal à 3 ou 4.

Les exemples donnés pour les groupes Y sont applicables aux groupes Y'.

Il est souhaitable d'utiliser des silanes de formule (4) même dans le cas où dans l'huile (A) Y ne comporte pas de groupes hydroxy. Dans ce cas il est souhaitable d'utiliser des groupes Y de l'huile (A) identiques aux groupes Y' du silane (B).

Comme exemples de silanes (B) de formule (4), on peut citer plus particulièrement les polyacyloxysilanes, les polyalcoxysilanes, les polycétiminoxysilanes et les polyiminoxysilanes et en particulier les silanes suivants :

$CH_3Si(OCOCH_3)_3$ ; $C_2H_5Si(OCOCH_3)_3$ ;

$(CH_2{=}CH)Si(OCOCH_3)_3$ ; $C_6H_5Si(OCOCH_3)_3$ ; $CF_3CH_2CH_2Si(OCOCH_3)_3$ ;

$NC{-}CH_2CH_2Si(OCOCH_3)_3$ ; $CH_2ClSi(OCOCH_2CH_3)_3$ ;

$CH_3\ Si(ON{=}C(CH_3)C_2H_5)_2OCH_2CH_2OCH_3$ ;

$CH_3Si(ON{=}CH{-}CH_3)_2OCH_2CH_2OCH_3$

Les silanes (B) ci-dessus associés à des polydiorganosiloxanes $\alpha,\omega$-dihydroxylés de formule (3) peuvent être utilisés en compositions monocomposantes stables à l'abri de l'air.

Comme exemples de silanes monomères de formule (4) qui, associés à des polydiorganosiloxanes $\alpha,\omega$-dihydroxylés de formule (3), peuvent être utilisés avantageusement en compositions bi-composantes, on peut citer les polyalcoxysilanes et en particulier ceux de formules :

$Si(OC_2H_5)_4$ ; $Si(O{-}n{-}C_3H_7)_4$ ; $Si(O{-}isoC_3H_7)_4$ ; $Si(OC_2H_4OCH_3)_4$;

$CH_3Si(OCH_3)_3$ ; $CH_2{=}CHSi(OCH_3)_3$ ; $CH_3Si(OC_2H_4OCH_3)_3$ ;

$ClCH_2Si(OC_2H_5)_3$ ; $CH_2{=}CHSi(OC_2H_4OCH_3)_3$

A tout ou partie des silanes monomères ci-dessus décrits on peut substituer des polyalcoxypolysiloxanes dont chaque molécule compte au moins deux, de préférence trois, groupes Y' ; les autres valences du silicium sont satisfaites par des liaisons siloxaniques SiO et SiR.

Comme exemple d'agent réticulant polymère, on peut citer le polysilicate d'éthyle.

On utilise généralement de 0,1 à 20 parties en poids d'agent réticulant de formule (4) pour 100 parties en poids de polymère de formule (3).

Les agents réticulants (B) de formule (4), qu'ils soient utilisables pour la préparation des compositions monocomposantes ou bicomposantes, sont des produits accessibles sur le marché des silicones ; de plus leur emploi dans les compositions durcissant dès la température ambiante est connu ; il figure notamment dans les brevets français FR-A-1 126 411, FR-A-1 179 969, FR-A-1 189 216, FR-A-1 198 749, FR-A-1 248 826, FR-A-1 314 649, FR-A-1 423 477, FR-A-1 432 799 et FR-A-2 067 636.

Les compositions polyorganosiloxanes durcissables en élastomère du type décrit ci-dessus peuvent comporter notamment de 0,001 à 10 parties en poids, de préférence de 0,05 à 3 parties en poids, de catalyseur de condensation (C) pour 100 parties en poids de polysiloxane de formule (3).

La teneur en catalyseur de condensation des compositions mono-composantes est généralement beaucoup plus faible que celle utilisée dans les compositions bi-composantes et peut être notamment comprise entre 0,001 et 0,05 partie en poids pour 100 parties en poids de polysiloxane de formule (3).

Ces catalyseurs seront décrits plus en détail plus loin.

Les compositions selon l'invention peuvent comporter en outre des charges renforçantes ou semi-renforçantes ou de bourrage qui sont de préférence choisies parmi les charges siliceuses.

Les charges renforçantes sont choisies de préférence parmi les silices de combustion et les silices de précipitation. Elles ont notamment une surface spécifique, mesurée selon la méthode BET, d'au moins 50 $m^2/g$, de préférence supérieure à 70 $m^2/g$, une dimension moyenne des particules primaires de préférence inférieure à 0,1 $\mu m$ (micromètre) et une densité apparente de préférence inférieure à 200 g/litre.

Ces silices peuvent être incorporées telles quelles ou après avoir été traitées par des composés organosiliciques habituellement utilisés pour cet usage. Lors de ces traitements, les silices peuvent accroître leur poids de départ jusqu'à un taux de 20 %, de préférence 18 % environ. Parmi les composés de traitement figurent les siloxanes et cyclosiloxanes, e.g. les méthylpolysiloxanes tels que l'hexaméthyldisiloxane, l'octaméthyldisiloxane, l'octaméthylcyclotétrasiloxane, les silazanes, e.g. méthylpolysilazanes tels que l'hexaméthyldisilazane, l'hexaméthylcyclotrisilazane, les chlorosilanes tels que le diméthylchlorosilane, le triméthylchlorosilane, le méthylvinyldichlorosilane , le diméthylvinylchlorosilane, les alcoxysilanes tels que le diméthyldiméthoxysilane, le diméthylvinyléthoxysilane, le triméthylméthoxysilane.

On peut aussi traiter la charge in situ, notamment avec l'un des agents ci-dessus et plus particulièrement avec des silazanes tels que l'hexaméthyldisilazane (hmdz). Dans ce cas, l'agent de traitement peut être incorporé dans la composition silicone avant la silice, après elle ou en deux temps.

Par traitement in situ de la charge siliceuse, on entend la mise en présence de la charge et de l'agent de compatibilisation en présence d'au moins une portion d'huile silicone polyorganosiloxane (A). De manière particulièrement préférée, cela consiste essentiellement à introduire de l'agent de compatibilisation (AC) en deux temps dans le milieu de préparation :

- d'une part, avant et/ou sensiblement simultanément à la mise en présence d'au moins une partie de l'huile silicone mise en oeuvre avec au moins une portion de la charge siliceuse utilisée, cette introduction d'AC (portion 1) s'opérant en une ou plusieurs fois et correspondant à une proportion inférieure ou égale à 8 %, de préférence à 5 % et, plus préférentiellement encore, à 3 % en poids sec par rapport à la charge totale ;
- et d'autre part (portion 2), après cette mise en présence d'huile silicone/charge.

L'agent de compatibilisation de la portion 1 est ainsi choisi parmi des molécules qui satisfont à au moins deux critères :

- présenter une interaction forte avec la silice au niveau de ses liaisons hydrogène avec elle-même, et avec l'huile silicone environnante
- être elle-même, ou ses produits de dégradation, aisément évacués du mélange final par chauffage sous vide ou sous courant gazeux, et les composés de bas poids moléculaire sont donc préférés.

L'agent de la portion 1 pourra être par exemple :

- un silazane, de préférence un disilazane, ou leurs mélanges, l'hexaméthyldisilazane (hmdz) étant le silazane préféré et pouvant être associé au divinyltétraméthyldisilazane
- un siloxane hydroxylé di- ou de préférence mono-fonctionnel
- une amine telle que l'ammoniaque ou une alkylamine de bas poids moléculaire comme la diéthylamine
- un acide organique de bas poids moléculaire comme les acides formique ou acétique,
- et est de préférence mis en oeuvre en présence d'eau.

Les agents de compatibilisation de la portion 2 peuvent être choisis parmi les différents silazanes et disilazanes rencontrés ci-dessus, pris seuls ou en mélanges entre eux, de préférence parmi les disilazanes, l'hexaméthyldisilazane associé ou non au divinyltétraméthyldisilazane étant particulièrement préféré.

Pour plus de détails, l'homme de l'art peut se reporter à WO-A-98 58997 ou à la demande de brevet français 98 16510 déposée le 23 décembre 1998.

On peut aussi utiliser une silice non traitée, conjointement à l'utilisation d'additifs facilitant la mise en oeuvre ("processing aids"), par exemple des fluides silicones hydroxylés ou méthoxylés ou encore des silanes fonctionnels.

Les charges semi-renforçantes ou de bourrage ont un diamètre particulaire de préférence supérieur à 0,1 $\mu m$ (micromètre) et sont notamment choisies parmi le quartz broyé, les argiles calcinées et les terres de diatomées.

On peut généralement utiliser de 0 à 100 parties, de préférence de 5 à 80 parties de charge pour 100 parties d'huile (A).

Les bases de compositions silicone définies de façon générale ci-dessus sont bien connues de l'homme de métier. Elles sont décrites en détail dans la littérature et la plupart sont disponibles dans le commerce. Ces compositions

réticulent à température ambiante en présence d'humidité apportée par l'air et/ou contenue dans la composition. Elles se divisent en deux grandes familles. La première famille est constituée par les compositions mono-composantes ou à un seul emballage stables au stockage à l'abri de l'humidité de l'air et durcissant en élastomère à l'humidité de l'air. Dans ce cas, le catalyseur de condensation (C) utilisé est un composé métallique, généralement un composé de l'étain, du titane ou du zirconium.

Selon la nature des groupements condensables ou hydrolysables, ces compositions mono-composantes sont dites acides, neutres, ou basiques.

Comme compositions acides, on peut citer par exemple les compositions décrites dans les brevets US-A-3 035 016, US-A-3-077 465, US-A-3-133 891, US-A-3 409 573, US-A-3 438 930, US-A-3 647 917 et US-A-3 886 118.

Comme compositions neutres, on peut utiliser par exemple les compositions décrites dans les brevets US-A-3 065 194, US-A-3 542 901, US-A-3 689 454, US-A-3 779 986, GB-A-2 052 540, US-A-4 417 042 et EP-A-69 256.

Comme compositions basiques, on peut par exemple utiliser les compositions décrites dans les brevets US-A-3 378 520, US-A-3 364 160, US-A-3 417 047, US-A-3 742 004 et US-A-3 758 441.

On peut également utiliser selon une variante préférée les compositions coulantes mono-composantes telles que celles décrites dans les brevets US-A-3 922 246, US-A-3 956 280 et US-A-4 143 088.

La deuxième famille qui est la famille préférée dans le cadre de la présente invention est constituée par les compositions à deux composantes ou à deux emballages, comportant de préférence une huile (A) $\alpha,\omega$-dihydroxydiorganopolysiloxane, un silane (B) ou un produit provenant de l'hydrolyse partielle de ce silane, et un catalyseur (C) qui est un composé métallique, de préférence un composé de l'étain et/ou une amine.

Des exemples de telles compositions sont décrits dans les brevets US-A-3 678 002, US-A-3 888 815, US-A-3 933 729, US-A-4 064 096 et GB-A-2 032 936.

Conviennent bien les compositions bi-composantes comportant :

- (A) : 100 parties d'une huile $\alpha,\omega$-dihydroxydiorganopolysiloxane de viscosité de 50 à 300 000 mPa.s dont les radicaux organiques sont choisis parmi les radicaux méthyl, éthyl, vinyl, phényl et trifluoro-3,3,3 propyl, au moins 60 %, de préférence 80 %, en nombre étant des radicaux méthyl, jusqu'à 20 % en nombre pouvant être des radicaux phényl, au plus 2 % pouvant être des radicaux vinyl.
- (B) : de 0,5 à 15 parties d'un polyalcoxysilane ou polyalcoxysiloxane,
- (C) : de 0,01 à 1 partie (calculée en poids d'étain métal) d'un composé catalytique de l'étain,
- (D) de 0 à 100 parties, de préférence de 5 à 80 parties de charge minérale siliceuse
- (E) : au moins un additif conforme à l'invention, notamment à raison de 1 à 5 % en poids par rapport à l'ensemble de la composition.

Conviennent bien aussi les compositions silicones bicomposantes ayant la composition suivante exprimée en parties pondérales :

de 25 à 75 parties d'un polydiméthylsiloxane (PDMS) terminé hydroxy et caractérisé par une viscosité de 5 à 100 Pa.s

- de 10 à 50 parties d'un PDMS à terminaisons triméthylsilyles caractérisé par une viscosité de 20 à 2000 mPa.s
- de 15 à 30 parties d'une charge minérale siliceuse, notamment silice, caractérisée par une surface spécifique d'au moins 90 $m^2/g$
- de 3 à 10 parties d'agent de compatibilisation, e.g. hmdz
- de 1 à 5 parties d'eau
- de 0 à 40 parties d'une charge de silice broyée de granulométrie moyenne d'environ 5 à 10 $\mu m$
- au moins un additif conforme à l'invention, notamment à raison de 1 à 5 % en poids par rapport à l'ensemble de la composition.

Une telle composition est réticulable à froid par adjonction d'un mélange catalysant comprenant au moins 1 molécule réticulante telle qu'un alcoxysilane au moins trifonctionnel (e.g. silicate de méthyle, silicate d'éthyle, méthyltriméthoxysilane) et un catalyseur de polycondensation des silicones, comme un catalyseur à l'étain.

Les catalyseurs à l'étain sont abondamment décrits dans la littérature ci-dessus ; ce peut être en particulier un sel d'étain d'un acide mono- ou dicarboxylique. Ces carboxylates d'étain sont décrits notamment dans l'ouvrage de NOLL (Chemistry and Technology of Silicones, page 337, Academic Press, 1968, 2ème édition). On peut en particulier citer le naphténate, l'octanoate, l'oléate, le butyrate, le dilaurate de dibutylétain, le diacétate de dibutylétain, le didécanoate de diméthylétain. On peut également utiliser comme composé catalytique à l'étain le produit de réaction d'un sel d'étain, en particulier d'un dicarboxylate d'étain sur du polysilicate d'éthyle comme décrit dans le brevet US-A-3 186 963. On peut également utiliser le produit de réaction d'un dialkyldialcoxysilane sur un carboxylate d'étain comme décrit dans le brevet US-A-3 862 919. On peut également utiiser le produit de réaction d'un silicate d'alkyle ou d'un alkytrialcoxysilane

sur le diacétate de dibutylétain comme décrit dans le brevet belge BE-A-842 305. On peut aussi utiliser le couple phényltriméthoxysilane - didécanoate de diméthylétain.

Parmi les agents de réticulation (B), on préfère plus particulièrement les alkyltrialcoxysilanes, les silicates d'alkyle et les polysilicates d'alkyle, dans lesquels les radicaux organiques sont des radicaux alkyles ayant de 1 à 4 atomes de carbone.

Les silicates d'alkyle peuvent être choisis parmi le silicate de méthyle, le silicate d'éthyle, le silicate d'isopropyle, le silicate de n-propyle et les polysilicates choisis parmi les produits d'hydrolyse partielle de ces silicates ; ce sont des polymères constitués d'une proportion importante de motifs de formule $(R^4O)_3SiO_{0,5}$, $R^4OSiO_{1,5}$, $(R^4O)_2SiO$ et $SiO_2$ ; le symbole $R^4$ représentant les radicaux méthyl, éthyl, isopropyl, n-propyl. Pour les caractériser, on se base habituellement sur leur teneur en silice qui est établie par dosage du produit d'hydrolyse d'un échantillon.

On peut en particulier utiliser comme polysilicate, un silicate d'éthyle partiellement hydrolysé commercialisé sous la marque "Ethyl Silicate-40®" par Union Carbide Corporation, ou un silicate de propyle partiellement hydrolysé.

Les compositions de polycondensation peuvent comprendre en outre de 10 à 130 parties en poids d'huile(s) polydiméthylsiloxane(s) bloquée(s) à chacune des extrémités de chaînes par un motif $(CH_3)_3SiO_{0,5}$, de viscosité à 25°C comprise entre 10 et 5000 mPa.s, pour 100 parties d'huile(s) (A).

Les compositions peuvent en outre comprendre, à titre optionnel, des adjuvants pour la réticulation tels que des fluides hydroxylés comme l'eau et des silicones, des pigments et/ou des adjuvants spécifiques.

Les compositions selon l'invention peuvent être mises en formes, extrudées et en particulier moulées sur une forme dont on veut prendre l'empreinte, puis être durcies à la température ambiante en un élastomère à l'humidité atmosphérique ou par addition d'eau. Un léger chauffage à une température de 20 à 150°C peut accélérer le ducissement.

Un deuxième groupe de silicones utilisables selon l'invention concerne une composition de polyaddition durcissable en un élastomère par des réactions d'hydrosilylation, caractérisée en ce qu'elle comporte :

- (A) : au moins une huile diorganopolysiloxane présentant par molécule au moins deux groupes alcényl, de préférence vinyl, liés au silicium,
- (B) : au moins une huile diorganopolysiloxane présentant par molécule au moins trois atomes d'hydrogène liés au silicium,
- (C) : une quantité catalytiquement efficace d'un catalyseur qui est en général un composé d'un métal du groupe du platine,
- (D) : éventuellement tout autre additif utilisé usuellement dans ce type de composition, e.g. une charge,
- (E) : au moins un additif conforme à l'invention.

Les quantités de (A) et (B) sont généralement choisies de manière que le rapport molaire des atomes d'hydrogène liés au silicium dans (B) aux radicaux vinyle liés au silicium dans (A) soit compris généralement entre 0,4 et 10, de préférence entre 0,6 et 5.

Les groupes vinyle dans (A) et les atomes d'hydrogène dans (B) sont généralement liés à des atomes de silicium différents.

Ces compositions réticulent par réaction d'addition (dénommée également réaction d'hydrosilylation), catalysée par un composé d'un métal du groupe du platine, d'un groupe vinyle de l'organopolysiloxane (A) sur une fonction hydrure de l'organopolysiloxane (B).

L'organopolysiloxane vinylé (A) peut être un organopolysiloxane présentant des motifs siloxyle de formule (5) :

$$Y_a Z_b SiO_{\frac{(4-a-b)}{2}}$$

dans laquelle Y est un groupe vinyle, Z est un groupe hydrocarboné monovalent n'ayant pas d'action défavorable sur l'activité du catalyseur, Z étant généralement choisi parmi les groupes alkyles ayant de 1 à 8 atomes de carbone inclus tels que les groupes méthyle, éthyle, propyle et 3,3,3-trifluoropropyle et les groupes aryle tels que xylyle, tolyle et phényle, a est 1 ou 2, b est 0, 1 ou 2 et a + b est compris entre 1 et 3, éventuellement tous les autres motifs étant des motifs de formule moyenne (6) :

$$Z_cSiO_{\frac{4-c}{2}}$$

dans laquelle Z a la même signification que ci-dessus et c a une valeur comprise entre 0 et 3.

L'organopolysiloxane (B) peut être un organohydrogénopolysiloxane comportant des motifs siloxyle de formule (7) :

$$H_dW_eSiO_{\frac{4-d-e}{2}}$$

dans laquelle W est un groupe hydrocarboné monovalent n'ayant pas d'action défavorable sur l'activité du catalyseur et répondant à la même définition que Z, d est 1 ou 2, e est 0, 1 ou 2, d + e a une valeur comprise entre 1 et 3, éventuellement tous les autres motifs étant des motifs de formule moyenne (8) :

$$W_gSiO_{\frac{4-g}{2}}$$

dans laquelle W a la même signification que ci-dessus, g a une valeur comprise entre 0 et 3.

L'organopolysiloxane (A) peut être uniquement formé de motifs de formule (5) ou peut contenir en outre des motifs de formule (6).

L'organopolysiloxane (A) peut présenter une structure linéaire ramifiée cyclique ou en réseau. Le degré de polymérisation est 2 ou plus et est généralement inférieur à 5 000. Par ailleurs, si l'organopolysiloxane (A) est linéaire, il présente une viscosité à 25°C inférieure à 500 000 mPa.s.

Z est généralement choisi parmi les radicaux méthyl, éthyl et phényl, 60 % molaire au moins des radicaux Z étant des radicaux méthyl.

Les organopolysiloxanes (A) et (B) sont bien connus et sont par exemple décrits dans les brevets US-A-3 220 972, US-A-3 284 406, US-A-3 436 366, US-A-3 697 473 et US-A-4 340 709.

Des exemples de motifs siloxyle de formule (5) sont le motif vinyldiméthylsiloxyle, le motif vinylphénylméthylsiloxyle, le motif vinylsiloxyle et le motif vinylméthylsiloxyle.

Des exemples de motifs siloxyle de formule (6) sont les motifs $SiO_{4/2}$, diméthylsiloxyle, méthylphénylsiloxyle, diphénylsiloxyle, méthylsiloxyle et phénylsiloxyle.

Des exemples d'organopolysiloxane (A) sont les diméthylpolysiloxanes à extrémités diméthylvinylsiloxyle, les copolymères méthylvinyldiméthylpolysiloxanes à extrémités triméthylsiloxyle, les copolymères méthylvinyldiméthylpolysiloxanes à extrémités diméthylvinylsiloxyle, les méthylvinylpolysiloxanes cycliques.

L'organopolysiloxane (B) peut être uniquement formé de motifs de formule (7) ou comporte en plus des motifs de formule (8).

L'organopolysiloxane (B) peut présenter une structure linéaire ramifiée cyclique ou en réseau. Le degré de polymérisation est 2 ou plus et est généralement inférieur à 5 000.

Le groupe W a la même signification que le groupe Z ci-dessus.

Des exemples de motifs de formule (7) sont :

$H(CH_3)_2SiO_{1/2.}$ $HCH_3SiO_{2/2}$ , $H(C_6H_5)SiO_{2/2}$ .

Les exemples de motifs de formule (8) sont les mêmes que ceux donnés plus haut pour les motifs de formule (6).

Des exemples d'organopolysiloxane (B) sont les diméthylpolysiloxanes à extrémités hydrogénodiméthylsilyle, les copolymères diméthylhydrogénométhylpolysiloxanes à extrémités triméthylsiloxyle, les copolymères diméthylhydrogénométhylpolysiloxanes à extrémités hydrogénodiméthylsiloxyle, les hydrogénométhylpolysiloxanes à extrémités triméthylsiloxyle, les méthylvinylpolysiloxanes cycliques.

Le rapport du nombre d'atomes d'hydrogène liés au silicium dans l'organopolysiloxane (B) sur le nombre de

groupes à insaturation alcényle de l'organopolysiloxane (A) est compris entre 0,4 et 10, de préférence entre 0,6 et 5.

L'organopolysiloxane (A) et /ou l'organopolysiloxane (B) peut être dilué dans un solvant organique non toxique compatible avec les silicones.

Les organopolysiloxanes (A) et (B) en réseau sont dénommés couramment résines silicones.

Les bases de compositions silicones polyaddition peuvent ne comporter que des organopolysiloxanes (A) et (B) linéaires comme par exemples ceux décrits dans les brevets américains précités : US-A-3 220 972, US-A-3 697 473 et US-A-4 340 709, ou comporter à la fois des organopolysiloxanes (A) et (B) ramifiés ou en réseau comme par exemple ceux décrits dans les brevets américains précités : US-A-3 284 406 et US-A-3 436 366.

La composition de polyaddition peut comprendre en outre de 5 à 40 parties en poids d'huile(s) polydiméthylsiloxane(s) bloquée(s) à chacune des extrémités de chaînes par un motif $(CH_3)_3SiO_{0.5}$, de viscosité à 25°C comprise entre 10 et 5000 mPa.s, pour 100 parties des organopolysiloxanes (A) + (B).

Les catalyseurs (C) sont également bien connus. On utilise de préférence les composés du platine et du rhodium. On peut utiliser les complexes du platine et d'un produit organique décrit dans les brevets américains US-A-3 159 601, US-A-3 159 602, US-A-3 220 972 et les brevets européens EP-A-57 459, EP-A- 188 978 et EP-A-190 530, les complexes du platine et d'organopolysiloxane vinylé décrits dans les brevets américains : US-A-3 419 593, US-A-3 715 334, US-A-3 377 432 et US-A-3 814 730. On peut utiliser les complexes du rhodium décrits dans les brevets britanniques : GB-A-1 421 136 et GB-A-1 419 769.

Les catalyseurs au platine sont préférés. Dans ce cas la quantité pondérale de catalyseur (C) calculée en poids de platine-métal est généralement comprise entre 2 et 600 ppm, en général entre 5 et 200 ppm, basée sur le poids total des organopolysiloxanes (A) et (B).

Les compositions de polyaddition préférées dans le cadre de la présente invention sont celles qui comportent :

- (A) : 100 parties d'une huile diorganopolysiloxane bloquée à chaque extrémité de sa chaîne par un motif vinyldiorganosiloxyle dont les radicaux organiques liés aux atomes de silicium sont choisis parmi les radicaux méthyl, éthyl et phényl, au moins 60 % molaire de ces radicaux étant des radicaux méthyl, de viscosité 100 à 500 000, de préférence de 1 000 à 200 000 mPa.s à 25° C ;
- (B) : au moins un organohydrogénopolysiloxane choisi parmi les homopolymères et copolymères liquides linéaires ou en réseau présentant par molécule au moins 3 atomes d'hydrogène liés à des atomes de silicium différents et dont les radicaux organiques liés aux atomes de silicium sont choisis parmi les radicaux méthyl, éthyl et phényl, et 60 % au moins de ces radicaux étant des radicaux méthyl, le produit (B) étant utilisé en quantité telle que le rapport molaire des fonctions hydrure sur les groupes vinyle soit compris entre 1,1 et 4 ;
- (C) : une quantité catalytiquement efficace d'un catalyseur au platine ;
- (E) : au moins un additif selon l'invention, notamment à raison de 1 à 5 % en poids par rapport à l'ensemble de la composition.

De façon encore plus préférée, jusqu'à 50 % en poids du polymère (A) est remplacé par un copolymère en réseau comportant les motifs triméthylsiloxyle, méthylvinylsiloxyle et $SiO_{4/2}$ dans lequel de 2,5 à 10 % molaire des atomes de silicium comportent un groupe vinyle et dans lequel le rapport molaire des groupes triméthylsiloxyle aux groupes $SiO_{4/2}$ est compris entre 0,5 et 1.

Les compositions selon l'invention peuvent comporter en outre des charges (D) renforçantes ou semi-renforçantes ou de bourrage, telles que décrites ci-dessus dans le cadre des compositions de polycondensation.

On peut généralement utiliser de 5 à 100 parties, de préférence de 5 à 50 parties de charge pour 100 parties de la somme des organopolysiloxanes (A) + (B).

Les compositions de polyaddition sont généralement stockées en deux emballages. En effet, elles réticulent dès qu'on mélange tous leurs constituants. Si l'on veut retarder cette réticulation pour obtenir une bonne homogénéisation de la matière active, on peut ajouter à la composition un inhibiteur du catalyseur au platine.

Ces inhibiteurs sont bien connus. On peut en particulier utiliser les amines organiques, les silazanes, les oximes organiques, les diesters de diacides carboxyliques, les alcools acétyléniques , les cétones acétyléniques, les vinylméthylcyclopolysiloxanes (voir par exemple US-A-3 445 420 et US-A-3 989 667). L'inhibiteur est utilisé à raison de 0,005 à 5 parties, de préférence de 0,01 à 3 parties pour 100 parties du constituant (A).

Pour obtenir une bonne homogénéisation de répartition de la matière active, il est en effet souhaitable que la matrice silicone présente une certaine viscosité de l'ordre de 5 000 à 30 000 mPa.s à 25°C. Une telle viscosité peut être obtenue par une préréticulation, celle-ci étant bloquée à la viscosité désirée par addition d'un inhibiteur. On dispose ainsi de suffisamment de temps pour bien homogénéiser la matière active au sein de la matrice silicone. La réticulation est alors achevée par chauffage de la matrice à une température telle que l'inhibiteur n'a plus d'effet sur l'action catalytique du platine.

Les compositions selon l'invention peuvent être malaxées à froid telles quelles et être mises en formes, notamment moulées sur la forme à reproduire.

Selon une particularité de l'invention, on associe les additifs selon l'invention entre eux et/ou avec des additifs classiques, en particulier des additifs classiques tels que ceux décrits dans EP-A-787 766 et FR-A-2 773 165. Plus généralement, on peut leur associer des additifs tels que :

- (1 i) les additifs antioxydants comprenant dans leur structure au moins 2, de préférence 4, groupes de formule

  $$-R^a-OOC-R^b-S-R^c$$

  dans laquelle :

  . les radicaux $R^a$ sont, indépendamment l'un de l'autre, choisis parmi les groupes hydrocarbonés divalents ayant de 1 à 6 atomes de carbone, de préférence des alkylènes linéaires ou ramifiés, en particulier linéaires, notamment ayant de 1 à 4 atomes de carbone, de préférence 1 et 2 ;
  . les radicaux $R^b$ sont des groupements hydrocarbonés monovalents, en particulier alkylènes et de préférence $-CH_2-CH_2-$
  . les radicaux $R^c$ sont choisis parmi les alkyles ayant de 1 à 40 atomes de carbone, de préférence de 1 à 20 atomes de carbone.

  De préférence, ces structures sont reliées à un carbone, notamment un carbone tétravalent. On peut citer en particulier le tetra(laurylthiopropionate)pentaérythritol(TLPE-CAS 29 598-76-3).

- (2i) les additifs de formule

  $$R^d-OOC-R^e-S-R^f-COO-R^g$$

  dans laquelle :

  • les radicaux $R^d$ et $R^g$, indépendamment l'un de l'autre, sont choisis parmi les radicaux alkyle linéaires ou ramifiés ayant de 1 à 40 atomes de carbone, de préférence de 1 à 20 atomes de carbone ;
  • les radicaux $R^e$ et $R^f$, indépendamment l'un de l'autre, sont des groupes hydrocarbonés divalents, en particulier alkylènes et de préférence $-CH_2-CH_2-$.

  On peut ainsi citer les composés suivants : tridécyl thiodipropionate, distéaryl-3,3'-thiodipropionate, dilauryl-3,3'-thiodipropionate.

- (3i) les phosphites, notamment phosphites d'alkyle, phosphites mixtes d'aryle et d'alkyle, phosphites d'aryle et phosphites divers, e.g. :

  triphényl phosphite, tri-isodécylphosphite, tri-lauryl-phosphite, dilauryl-phosphite, diphénylisodécylphosphite, diphényl-iso-octyl-phosphite, diphényl-éthyl-2-hexyl-phosphite, diisodécylphénylphosphite, trimonononylphénylphosphite, phosphite de 2,4-dinonylphényl et de di(4-monononylphényl), Tris (2,4-ditertiaire-butyl-phényl) phosphite (CAS 31570-04-4), 2,2-méthylène-bis-(4,6-di-t-butyl phényl) octyl phosphite, produit vendu sous la dénomination ®Sandostab P-EPQ par Sandoz AG Bâle, Suisse, $[CH_3(CH_2)_{11}S]_3P$, 2,2'-éthylidène bis (4,6-di-t-butylphényl) fluorophosphite CAS 118337-09-0.

- (4i) les phénols stériquement encombrés, les bisphénols stériquement encombrés, les thiobisphénols stériquement encombrés tels que notamment ceux décrits dans EP-A-787 766 et EP-A-854 167. A titre d'exemples, on peut citer: 2,6-di-t-butylphénol, 2,6-di-t-butyl-4-méthylphénol, octadécyl-3,5-di-t-butyl-4-hydroxyhydrocinnamat, 4,4'-méthylène-bis(2,6-di-t-butylphénol), 4,4'-méthylène-bis(2,6-diméthylphénol), 2,2'-méthylène-bis(4-méthyl-6-t-butylphénol), 2,2'-éthylidène-bis(4,6-di-t-butylphénol), 2,2'-méthylène-bis(4-méthyl-6(1-méthylcyclohexyl)phénol), 4,4'-butylidène-bis(6-t-butyl-3-méthylphénol), 1,1'-thio-bis(2-naphtol), 2,2'-thiobis(4-méthyl-6-t-butylphénol), 2,2'-isobutylidène-bis(4,6-diméthylphénol), monométhacrylate ester de 2,2'-méthylène-bis(4-éthyl-6-t-butylphénol), 1,3,5-triméthyl-2,4,6-tris(3,5-di-t-butyl-4-hydroxybenzyl)-benzène, 4,4'-thiobis(6-t-butyl-3-méthylphénol), 4,4'-thio-bis(4,6-di-t-butylphénol), 2,6-di-t-butyl-p-crésol, 2-t-butyl-4-méthoxyphénol, 3-t-butyl-4-méthoxyphénol, phénols alkyl-, dialky- ou trialkyl-substitués, avec alkyl en C1 à C30, styrylphénol, di-styrylphénol, tri-styrylphénol, tétrakis(méthylène 3-(3,5-di-t-butyl-4-hydroxyphényl)propionate)méthane, 1,3,5-tris(3,5-di-t-butyl-4-hydroxybenzyl)-s-triazine-2,4,6(1H,3H,5H)trione, 2,4-bis(n-octylthio)-6-(4-hydroxy-3,5-di-t-butylamino) 1,3,5-triazine, 4-(hydroxyméthyl)-2,6-di-t-butylphénol, 2,2-diphényl-1-picrylhydrazyl.

- (5i) les thiophosphates métalliques, notamment les thiophosphates de zinc tels que dialkyldithiophosphate de zinc ou diaryldithiophosphate de zinc de formule $Zn[S\text{-}P(S)\text{-}(OR^u)_2]_2$ dans laquelle $R^u$ est un reste hydrocarboné monovalent ayant de 1 à 14 atomes de carbone, de préférence méthyl, éthyl, n-propyl, n-butyl, n-pentyl, n-hexyl, 2-éthylhexyl, n-octyl, phényl, tolyl (EP-A-787 766). Il s'agit de préférence du di-n-hexyldithiophosphate de zinc, du di-2-éthylhexyldithiophosphate de zinc ou du diphényldithiophosphate de zinc.

- (6i) les amines aromatiques telles que notamment celles décrites dans EP-A-787 766. A titre d'exemples, on peut citer: N-phénylbenzylamine, N-phényl-1-naphtylamine, 4,4'-di($\alpha$,$\alpha$'-diméthylbenzyl)diphénylamine, 4,4'-di(2,4,4-triméthylpentyl)diphénylamine, N,N'-diphényl-1,4-phénylènediamine, N-phényl-N'-(1,3-diméthylbutyl)-1,4-phénylènediamine, (4-anilinophényl)méthacrylate.

- (7i) les amines encombrées appelées HALS de type N-OR, N-R et N-H (Hindered Amine Light Stabilizers - voir Oxidation Inhibition in Organic Materials Vol. II, Chapter 1 : Hindered amines as photostabilizers, Jiri Sedlar). On peut aussi se référer à EP-A-432 096, EP-A-787 766 et FR-A-773 165. Des amines commerciales typiques sont vendues sous l'appellation Tinuvin® par Ciba Geigy, Novartis ou Sankyo. Les préférées sont celles de type N-OR, soit :

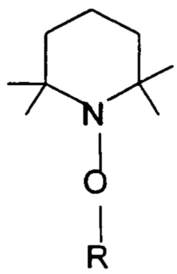

notamment celles comportant au moins un groupe :

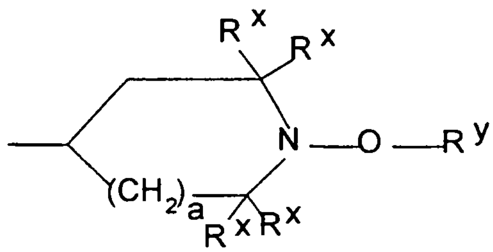

dans lequel $R^y$ est l'hydrogène ou un alkyle linéaire ou ramifié en C1 à C18, éventuellement substitué par un ou plusieurs groupes phényle(s), ou un cycloalkyle en C5 à C6 ou benzyle, a est 0 ou 1, de préférence 1, les radicaux $R^x$, identiques ou différents entre eux, sont choisis parmi les radicaux alkyles, linéaires ou ramifiés, en C1 à C3, phényles et benzyles.

Parmi ces composés, on préfère les sébaçates, notamment ceux de formule :

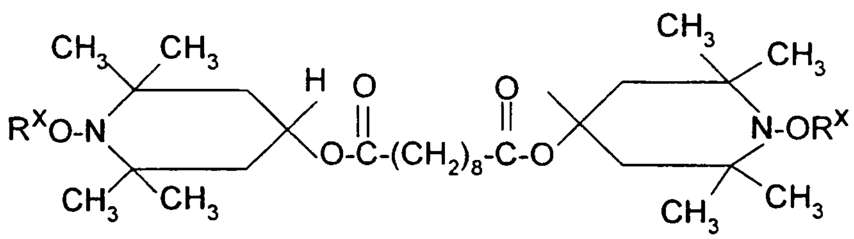

avec les significations comme ci-dessus, et tout particulièrement le Tinuvin® 123 : bis(1-octyloxy-2,2,6,6-tetraméthyl-4-pipéridyl)sébaçate de formule développée :

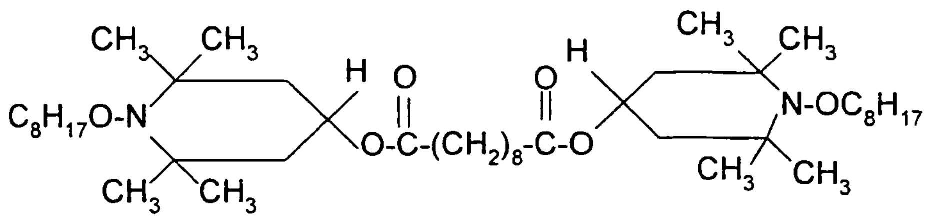

Comme référence générale sur les anti-oxydants potentiellement utilisables comme co-additif, on peut citer Martin Dexter, Antioxydants, Encyclopedia of Chemical Technology, Vol. 3, p 424-447, 4ème édition, 1990.

Parmi tous les additifs classiques, on préfère utiliser le TLPE ou les composés de type sébaçate, et en particulier le bis(1-octyloxy-2,2,6,6-tetraméthyl-4-pipéridyl)sébaçate (Tinuvin®123).

La présente invention a aussi pour objet un procédé de préparation de moules en élastomère silicone, notamment destinés au moulage de pièces en polyester, dans lequel on incorpore à la composition silicone un ou plusieurs additifs conformes à l'invention, éventuellement en association avec des additifs classiques. Dans le cadre de ce procédé, additifs selon l'invention, additifs classiques complémentaires et compositions silicone peuvent être tels que décrits ailleurs dans la présente demande.

L'invention a encore pour objet les moules en élastomère silicone susceptibles d'être obtenus par réticulation d'une composition de polyaddition ou de polycondensation telle que décrite ci-dessus. Elle a également pour objet l'élastomère silicone obtenu.

La présente invention va être maintenant décrite plus en détail à l'aide de modes de réalisation pris à titre d'exemples non limitatifs.

**EXEMPLE 1 :**

**Préparation du laurylthiopropionate de méthyle**

- Cet ester méthylique est obtenu par addition du dodécanethiol sur l'acrylate de méthyle :

$$C_{12}H_{25}\text{-}SH + CH_2{=}CH\text{-}CO\text{-}OMe \xrightarrow{NaOMe} C_{12}H_{25}\text{-}S - CH_2 - CH_2 - CO - O - Me$$

- Principe de la réaction :

Le dodécanethiol (101,2 g ; 0,5 mole) est pesé dans un ballon tricol de 205 ml muni d'un réfrigérant et d'une ampoule de coulée. Le méthylate de sodium (405 mg ; 7,5 mmole) est ensuite ajouté. L'acrylate de méthyle (49,9 g ; 0,58 mole) est pesé dans l'ampoule de coulée. Le ballon est placé dans un bain de glace et l'acrylate de méthyle est coulé doucement en maintenant la température ambiante ; on observe une légère exothermie. L'agitation est maintenue à température ambiante pendant 18 heures. Le lendemain, le mélange hétérogène est filtré sous pression d'azote. Passage du filtrat sur celite + frité et rinçage avec du toluène. Distillation du toluène et de l'acrylate de méthyle en excès (115°C et 4 mm de Hg - 5 heures). Arrêt de la distillation.

Caractéristiques du laurylthiopropionate de méthyle :

- Etat physique : liquide (température d'ébullition : 162-163,5° C)
- Masse moléculaire : 288,49
- Indice de réfraction : 1,466 à 589 nm et à 20°C

***EXEMPLE 2 :***

**Préparation de composition silicone réticulant à température ambiante par réaction de polycondensation**

1) Mélange de base: Rhodorsil® RTV V-2015 commercialisé par RHODIA SILICONES St-Fons, France ; avec 0,5 % de Tinuvin 123 (Ciba Geigy) = bis(1-octyloxy-2,2,6,6-tetraméthyl-4-pipéridyl) sébaçate ; on y ajoute la quantité voulue d'additif LTPMe, AO-23 et DTDTDP qui sont liquides à température ambiante ou après fusion dans le cas du TLPE (point de fusion 44°C).

2) Mélange catalysé :

On ajoute au mélange de base le catalyseur Rhodorsil® Catalyseur HI PRO GREEN, commercialisé par RHODIA SILICONES.

3) Mise en oeuvre du silicone RTV :

Le mélange de base catalysé est homogénéisé et dégazé. Le produit ainsi dégazé est ensuite coulé dans les moules appropriés. Le produit surmoulé (qui va constituer un moule) est réticulé à température ambiante (23 °C), et on procède au démoulage au bout de 3 jours. Les caractéristiques de l'élastomère sont alors les suivantes :

| Dureté -ShA- | Résistance au déchirement -kN/m- | Résistance à la rupture -Mpa- | Allongement à la rupture - % - |
|---|---|---|---|
| 17 | 18 | 3,6 | 450 |

4) Additifs

L'impact du laurylthiopropionate de méthyle sur la résistance aux polyesters a été comparé à celui que peuvent développer d'autres antioxydants, de plus haut poids moléculaire.

Caractéristiques des additifs :

| Références | Point de fusion °C | Température d'ébullition °C | Masse moléculaire |
|---|---|---|---|
| TLPE | ~44 | - | ~1162 |
| LTPME | - | 162-163,5 | ~288 |
| DTDTDP | - | 265 | ~542 |
| AO-23 | - | - | ~900 |

Structure et origine des produits étudiés

| Références | Fournisseur | Structure chimique |
|---|---|---|
| TLPE<br>Tetra(laurylthiopropionate) pentaérylthritol | Palmarole S.A. | $C[CH_2\text{-}O\text{-}OC\text{-}CH_2\text{-}CH_2\text{-}S\text{-}C_{12}H_{25}]_4$ |
| DTDTDP<br>Ditridécylthiodipropionate | Witco Akcros | $S[CH_2\text{-}CH_2\text{-}COOC_{13}H_{27}]_2$ |
| LTPMe<br>Laurylthiopropionate de méthyle | Synthétisé Exemple 1 | $C_{12}H_{25}$ - S-CH2 - $CH_2$-CO-O-Me |
| AO-23 | Palmarole S.A. | (i) |

(i) :

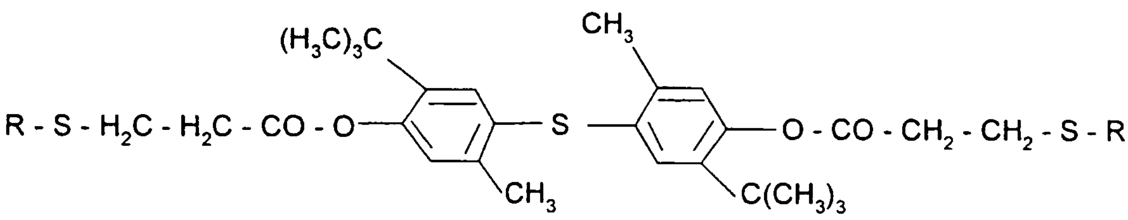

où R est un dérivé aliphatique en C12 à C14.

DTDTDP, LTPMe et AO-23 sont des liquides à température ambiante alors que le TLPE est un solide dont le point de fusion se situe vers 40°-45° C.

5) Résines polyesters

Toute cette étude a été réalisée avec une résine polyester à 40 % de styrène, vendue sous l'appellation SYNOLITE ® 0328-A-1 distribuée par DSM (BASF) France. Cette résine est catalysée par ajout de 2 % de Promox 200 (solution à 45 % de peroxyde de méthyléthylcétone dans un mélange de solvants organiques : phtalates et diacétone alcool) et de 0,2 % d'accélérateur (solution d'octoate de cobalt à 6 % dans du White Spirit). Le temps de gel de cette résine polyester est de 25 mn, la pièce moulée est démoulable en ~ 30 min, la réticulation est achevée en ~ 75 min.

6) Méthodes :

6-1- Introduction des additifs dans les RTV : ces additifs sont introduits sous forme liquide par dispersion directe dans la base du RTV à l'aide d'un agitateur à hélices ou manuellement. Dans le cas du TLPE, ce produit est fondu à 50°C avant d'être dispersé dans le RTV.

6-2- Evaluation des résistances aux résines : la résistance aux résines a été évaluée à l'aide de tests de moulage qui consistent à réaliser, dans un petit moule du RTV à tester, des coulées et démoulages successifs toutes les 30 min, d'une résine polyester jusqu'à ce qu'une partie du moule soit arrachée au moment du démoulage. Deux types de moules, représentatifs de différentes conditions d'utilisation ont été utilisés.

- un premier représente une partie du visage d'une statue; il est obtenu selon la technique de moulage sous chape. Dans le cadre de ce modèle expérimental, l'arrachement se produit toujours au même endroit dans une zone fragile qui se situe dans la chevelure de la figurine ; la géométrie de cette zone fragile correspond, en fait, à une lamelle de 1 x 2 cm et de 1 mm d'épaisseur.
  On note également au cours des moulages successifs une modification de l'aspect de la surface des moules (blanchiment, durcissement, gonflement) ainsi que la présence de zones fripées ou collantes à la surface des pièces moulées en polyesters. Le phénomène de blanchiment révèle la formation progressive de polystyrène dans les zones superficielles des moules ; les imperfections qui sont présentes à la surface des pièces moulées traduisent des phénomènes d'inhibition de la réticulation de la résine ; cette inhibition résulte de l'exsudation à l'interface moule/pièce moulée.
- le deuxième type de moule utilisé dans ces essais est un moule à picots. Ce moule est forme cubique (3,7 x 3,7 x 3,7 cm ; épaisseur des parois : 1,5 cm). 10 picots de 1 cm de hauteur et de 0,2 cm de diamètre sont répartis de manière régulière sur le fond du moule. C'est l'arrachement des picots disposés au fond de ces moules qui permet de caractériser la résistance aux résines.

7) Autres méthodes d'évaluations :

Les autres caractérisations sont effectuées selon les procédures classiques.

. Viscosité Brookfield
. Dureté Shore A (ShA) : norme ASTM D 2240
. Résistance et allongement à la rupture : norme ASTM D 412

Test de déchirement : norme ASTM D 624, éprouvette B.

8) Résultats :

Trois types de résultats sont présentés ci-dessous :

- Propriétés mécaniques du RTV dopé avec les différents antioxydants (contenant 0,5 parties de Tinuvin et xx parties d'un des antioxydants qui viennent d'être décrits) et réticulé avec le catalyseur décrit sous 2) sauf dans le cas du DTDTDP ; dans ce cas, le RTV est réticulé avec un catalyseur contenant : 27,80 % de phényltriméthoxysilane, 2,20 % de sel d'étain (dinéodécanoate de diméthylétain), 33,24 % de solvant Mediaplast BSP (mélange d'alkylbenzène ($C_{10}$-$C_{16}$) 85 % et 15 % de solvant organique à fonctions esters ; vendu par KETTLITZ) et 11,76 % de BC 589-BSP (base colorante : Mediaplast BSP 90,15 parties, Silice A-130 9 parties, Rouge Chromophtal BRN 0,85 parties) et 25,00 % de DTDTDP.
- Résistance à la Synolite®328 avec le moule à picots ;
- Résistance à la Synolite®328 caractérisé avec le moule figurine.

8-1- Propriétés mécaniques :

Tableau : impact des additifs sur les propriétés mécaniques

| Antioxydant | Teneur | Dureté -ShA- | Résistance Déchirement - kN/m | Résistance Rupture -Mpa- | Allongement Rupture - % - |
|---|---|---|---|---|---|
| Témoins* | - | 17 | 18 | 3,6 | 450 |
| DTDTDP | 2,5 % | 15 | - | - | - |
| AO-23 | 1,5 % | 15 | 20 | 3,3 | 440 |
| TLPE | 1,5 % | 15 | 14 | 2,8 | 420 |
| | | | | | |
| LTPMe | 2,5 % | 14 | 18 | 2,9 | 450 |
| * RTV + catalyseur | | | | | |

8-2- Résistance aux polyesters-moules à Picots :

Les résultats des caractérisations obtenus avec les moules à picots sont donnés dans le tableau suivant. Les niveaux de résistance aux polyesters sont caractérisés par le nombre de coulées/démoulages qui peuvent être réalisés avant l'arrachement du premier picot.

| Antioxydant | Teneur | Nombre de pièces obtenues |
|---|---|---|
| Témoins | 0 % | 44*, 52** |
| LTPMe | 0,75 % | 61* |
| LTPMe | 2,5 % | 73*, 73** |
| * première série d'essais<br>** deuxième série d'essais | | |

Ces résultats montrent l'amélioration de la résistance aux polyesters des moules en présence de LTPMe.

8-3- Résistance aux polyesters-moules figurines :

Les résultats qui ont été obtenus avec ce type de moule figurent dans le tableau suivant :

| Antioxydant | teneur | Nombre de pièces obtenues |
|---|---|---|
| Témoins | 0 % | 74 |

(suite)

| Antioxydant | teneur | Nombre de pièces obtenues |
|---|---|---|
| AO-23 | 1,5 % | 85 |
| TLPE | 1,5 % | 91 |
| DTDTDP | 2,5 % | 95 |
| LTPMe | 0,75 % | 136 |
| LTPMe | 1,5 % | 179 |
| LTPMe | 2,5 % | > 200 |
| - Le LTPMe se démarque nettement : les essais ont été arrêtés après 200 coulées pour le 2,5 %. | | |

**EXEMPLE 3 :**

On peut reproduire l'exemple 2 en utilisant la composition suivante :

1) Mélange de base :

Partie A :

1. 420 parties d'un PDMS terminé hydroxy caractérisé par une viscosité de 18 Pa.s
2. 20 parties d'eau
3. 44 parties d'hmdz
4. 190 parties d'une silice renforçante caractérisée par une surface développée de 160 $1m^2/g$
5. 112 parties d'un PDMS à terminaisons triméthylsilyles ayant une viscosité de 50 mPa.s
6. 12 parties d'un PDMS terminé hydroxy caractérisé par une viscosité de 70 mPa.s
7. 4 parties d'eau

Ces ingrédients sont ajoutés dans l'ordre précité dans un malaxeur à bras de laboratoire ayant une capacité d'1,5 litre en appliquant le procédé suivant :

- homogénéisation d'environ 15 min après introduction des composants 1 à 3
- incorporation progressive du composant 4 en environ 1 heure
- homogénéisation supplémentaire de 30 min
- évacuation des espèces volatiles sous vide à 120° C
- refroidissement
- ajout des constituants 5 à 7
- homogénéisation pendant 45 min

On obtient ainsi une préparation nommée RTVA. L'additif est ajouté comme indiqué à l'exemple 2.

2) Mélange catalysé :

Partie B :

- 28 parties de phényltriméthoxysilane
- 2 parties de di-décanoate de diméthylétain
- 68 parties d'un PDMS terminé triméthylsilyle, de viscosité 100 mPa.s.

Le mélange catalysé est préparé dans un mélangeur simple du type à arbre central ; il est utilisé à raison de 10 parties pour 100 parties de RTVA.

**EXEMPLE 4 :**

Même composition qu'à l'exemple 1 avec ou sans Tinuvin 123.

| Additif | Sans additif ni Tinuvin, ni LTPMe | 2,5 %LTPMe | 0,5 % - Tinuvin 123 2,5 %-LTPMe |
|---|---|---|---|
| Nombre de moulages (moules/picots) | 48 | 67 | 72 |

Ces résultats montrent que : a) l'addition de LTPMe seule conduit déjà à une amélioration de l'ordre de 39 %, b) l'amélioration de l'effet du LTPMe grâce à l'ajout du Tinuvin.

## Revendications

**1.** Utilisation, pour augmenter la longévité des moules réalisés en élastomère silicone réticulant par réaction de polyaddition ou de polycondensation, d'additif capable de stabiliser l'élastomère silicone constituant le moule vis-à-vis des matières à mouler, l'additif répondant à la formule (1) suivante :

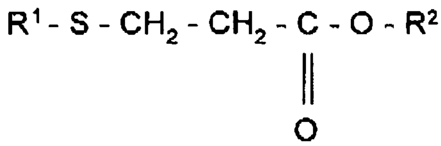

dans laquelle $R^1$ et $R^2$ sont des radicaux alkyles linéaires ou ramifiés ou des radicaux cycloaliphatiques ayant de 1 à 40 atomes de carbone.

**2.** Utilisation selon la revendication 1, **caractérisée en ce que** $R^1$ et $R^2$ sont tels que $R^1 + R^2 \leq 20$ atomes de C, de préférence $6 \leq R^1 + R^2 \leq 20$ atomes de C.

**3.** Utilisation selon la revendication 2, **caractérisée en ce que** $6 \leq R^1 + R^2 \leq 18$ atomes de C, de préférence $8 \leq R^1 + R^2 \leq 18$ atomes de C.

**4.** Utilisation selon la revendication 2, **caractérisée en ce que** $10 \leq R^1 + R^2 \leq 18$ atomes de C.

**5.** Utilisation selon la revendication 4, **caractérisée en ce que** l'additif comprend du laurylthiopropionate de méthyle LTPMe :

$$C_{12}H_{25}\text{-}S\text{-}CH_2\text{-}CH_2\text{-}CO\text{-}O\text{-}CH_3.$$

**6.** Utilisation selon l'une des revendications 2 à 5, pour le moulage d'objets à détails peu marqués.

**7.** Utilisation selon la revendication 1, **caractérisée en ce que** $R^1$ et $R^2$ sont tels que $R^1 + R^2 > 20$ atomes de C.

**8.** Utilisation selon la revendication 7, pour le moulage d'objets possédant des reliefs de profondeur ou d'épaisseur supérieure ou égale au millimètre et de largeur ou diamètre inférieur à 1 à 5 mm.

**9.** Utilisation selon la revendication 1, **caractérisée en ce que** l'on emploie un additif tel que décrit dans l'une des revendications 2 à 5 et un additif tel que décrit à la revendication 7.

**10.** Utilisation selon l'une quelconque des revendications 1 à 9, **caractérisée en ce que** l'on emploie l'additif entre 0,1 et 15 % en poids par rapport à la composition silicone totale.

**11.** Utilisation selon la revendication 10, **caractérisée en ce que** l'on emploie l'additif entre 0,2 et 10 %, de préférence

entre 0,5 et 5 % en poids par rapport à la composition silicone.

**12.** Utilisation selon l'une quelconque des revendications 1 à 11, **caractérisée en ce que** la composition comprend un autre additif de stabilisation.

**13.** Utilisation selon la revendication 12, **caractérisée en ce que** l'autre additif est choisi parmi le groupe consistant en :

- phosphites,
- phénols à encombrement stérique,
- amines aromatiques, amines encombrées HALS,
- thiophosphates métalliques,
- sels métalliques à effet oxydant,
- additifs comprenant dans leur structure au moins 2, de préférence 4, groupes de formule

$$-R^a\text{-OOC-}R^b\text{-S-}R^c$$

dans laquelle :

. les radicaux $R^a$ sont, indépendamment l'un de l'autre, choisis parmi les groupes hydrocarbonés divalents ayant de 1 à 6 atomes de carbone, de préférence des alkylènes linéaires ou ramifiés, en particulier linéaires, notamment ayant de 1 à 4 atomes de carbone, de préférence 1 et 2.
. les radicaux $R^b$ sont des groupements hydrocarbonés monovalents, en particulier alkylènes et de préférence $-CH_2CH_2-$
. les radicaux $R^c$ sont choisis parmi les alkyles ayant de 1 à 40 atomes de carbone, de préférence de 1 à 20 atomes de carbone, et

- additifs de formule $R^d\text{-OOC-}R^e\text{-S-}R^f\text{- COO-}R^g$
dans laquelle

. les radicaux $R^d$ et $R^g$, indépendamment l'un de l'autre, sont choisis parmi les radicaux alkyle linéaires ou ramifiés ayant de 1 à 40 atomes de carbone, de préférence de 1 à 20 atomes de carbone ;
les radicaux $R^e$ et $R^f$, indépendamment l'un de l'autre, sont des groupes hydrocarbonés divalents, en particulier alkylènes et de préférence $-CH_2-CH_2-$.

**14.** Utilisation selon la revendication 13, **caractérisée en ce que** la composition comprend du tetra(laurylthiopropionate) pentaérythritol.

**15.** Utilisation selon la revendication 13, **caractérisée en ce que** la composition comprend une amine encombrée HALS de type N-OR, de préférence comprenant au moins un groupe :

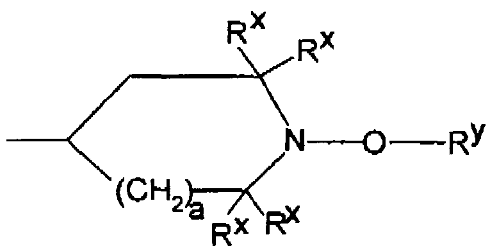

dans lequel $R^y$ est l'hydrogène ou un alkyle linéaire ou ramifié en C1 à C18, éventuellement substitué par un ou plusieurs groupes phényle(s), ou un cycloalkyle en C5 à C6 ou benzyle, a est 0 ou 1, de préférence 1, les radicaux $R^x$, identiques ou différents entre eux, sont choisis parmi les radicaux alkyles, linéaires ou ramifiés, en C1 à C3, phényles et benzyles.

**16.** Utilisation selon la revendication 15, **caractérisée en ce que** la composition comprend un sébacate, notamment de formule :

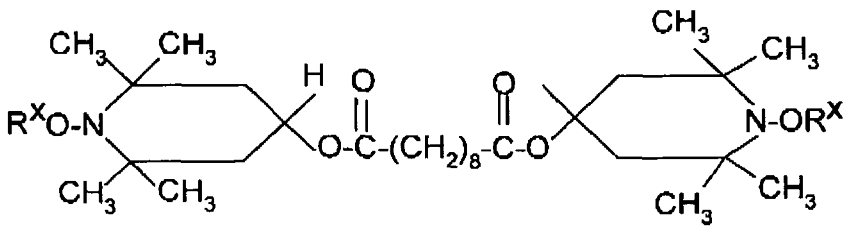

les radicaux $R^x$ , identiques ou différents entre eux, étant choisis parmi les radicaux alkyles, linéaires ou ramifiés, en C1 à C3, phényles et benzyles.

**17.** Utilisation selon la revendication 16, **caractérisée en ce que** la composition comprend du bis(1-octyloxy-2,2,6,6-tetraméthyl-4-pipéridyl)sébaçate.

**18.** Utilisation selon l'une quelconque des revendications 1 à 17 pour la stabilisation des élastomères silicones constitutifs de moules destinés au moulage de pièces en polyester, afin d'empêcher, au sein de l'élastomère silicone, la polymérisation du styrène issu de la résine polyester sans gêner la polymérisation à coeur et en surface du polyester.

**19.** Utilisation selon l'une quelconque des revendications 1 à 18, **caractérisée en ce qu'**elle permet d'obtenir un nombre de moulages par moule en hausse de plus de 20 % par rapport à un élastomère sans additif.

**20.** Composition silicone précurseur d'élastomère silicone utilisable pour la constitution de moules, notamment de moules pour le moulage de pièces en polyester, **caractérisée en ce qu'**elle comprend, à titre d'additif de stabilisation, au moins un additif répondant à la formule (1) suivante :

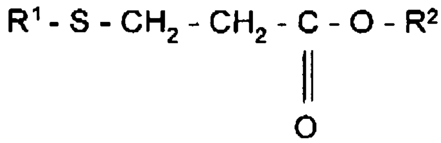

dans laquelle $R^1$ et $R^2$ sont des radicaux alkyles linéaires ou ramifiés ou des radicaux cycloaliphatiques ayant de 1 à 40 atomes de carbone.

**21.** Composition silicone selon la revendication 20, **caractérisée en ce qu'**elle comporte un ou plusieurs additifs tels que décrits dans l'une quelconque des revendications 2 à 5, 7 et 9, éventuellement en combinaison avec un additif tel que décrit dans l'une quelconque des revendications 12 à 17.

**22.** Composition selon la revendication 20 ou 21, **caractérisée en ce que** l'on emploie l'additif entre 0,1 et 15 % en poids par rapport à la composition silicone.

**23.** Composition selon la revendication 20 ou 21, **caractérisée en ce que** l'on emploie l'additif entre 0,2 et 10 %, de préférence entre 0,5 et 5 % en poids par rapport à la composition silicone.

**24.** Composition selon l'une quelconque des revendications 20 à 23, **caractérisée en ce qu'**elle comprend :

- (A) une huile diorganopolysiloxane présentant des groupes réactifs choisis parmi i) les groupes terminaux condensables, hydrolysables, hydroxy et 2i) les groupes alcényle, de préférence vinyles, liés au silicium ;
- (B) éventuellement un composé choisi dans le groupe consistant en silanes à groupes condensables ou hydrolysables dans le cas où (A) est choisi parmi les groupes i) et en huile diorganopolysiloxane portant des atomes d'hydrogène dans le cas où (A) est choisi parmi les groupes 2i) ;
- (C) un catalyseur ;
- (D) éventuellement tout autre additif usuellement utilisé dans le type de composition considéré.

## Claims

1. Use, for increasing the longevity of moulds made of silicone elastomer which crosslinks by a polyaddition or polycondensation reaction, of an additive capable of stabilizing the silicone elastomer constituting the mould with respect to materials to be moulded, the additive corresponding to the following formula (1):

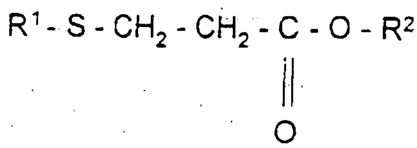

in which $R^1$ and $R^2$ are linear or branched alkyl radicals or cycloaliphatic radicals having from 1 to 40 carbon atoms.

2. Use according to Claim 1, **characterized in that** $R^1$ and $R^2$ are such that $R^1 + R^2 \leq 20$ C atoms, preferably $6 \leq R^1 + R^2 \leq 20$ C atoms.

3. Use according to Claim 2, **characterized in that** $6 \leq R^1 + R^2 \leq 18$ C atomss, preferably $8 \leq R^1 + R^2 \leq 18$ C atoms.

4. Use according to Claim 2, **characterized in that** $10 \leq R^1 + R^2 \leq 18$ C atoms.

5. Use according to Claim 4, **characterized in that** the additive comprises methyl laurylthiopropionate MeLTP:

$$C_{12}H_{25}\text{-}S\text{-}CH_2\text{-}CH_2\text{-}CO\text{-}O\text{-}CH_3.$$

6. Use according to one of Claims 2 to 5 for the moulding of objects comprising details which are not well marked.

7. Use according to Claim 1, **characterized in that** $R^1$ and $R^2$ are such that $R^1 + R^2 > 20$ C atoms.

8. Use according to Claim 7 for the moulding of objects having reliefs with a depth or thickness of greater than or equal to 1 millimetre and with a width or diameter of less than 1 to 5 mm.

9. Use according to Claim 1, **characterized in that** use is made of an additive such as described in one of Claims 2 to 5 and an additive such as described in Claim 7.

10. Use according to any one of Claims 1 to 9, **characterized in that** the additive is employed at between 0.1 and 15% by weight with respect to the overall silicone composition.

11. Use according to Claim 10, **characterized in that** the additive is employed at between 0.2 and 10%, preferably between 0.5 and 5%, by weight with respect to the silicone composition.

12. Use according to any one of Claims 1 to 11, **characterized in that** the composition comprises another stabilization additive.

13. Use according to Claim 12, **characterized in that** the other additive is chosen from the group consisting of:

- phosphites,
- sterically hindered phenols,
- aromatic amines and HALS hindered amines,
- metal thiophosphates,
- metal salts with an oxidizing action,
- additives comprising, in their structure, at least 2, preferably 4, groups of formula

$$-R^a\text{-}OOC\text{-}R^b\text{-}S\text{-}R^c$$

in which:

. the $R^a$ radicals are, independently of one another, chosen from divalent hydrocarbon groups having from 1 to 6 carbon atoms, preferably linear or branched, in particular linear, alkylenes, in particular having from 1 to 4 carbon atoms, preferably 1 and 2;

. the $R^b$ radicals are monovalent hydrocarbon groups, in particular alkylene groups and preferably $-CH_2-CH_2-$;

. the $R^c$ radicals are chosen from alkyls having from 1 to 40 carbon atoms, preferably from 1 to 20 carbon atoms, and

- additives of formula $R^d-OOC-R^e-S-R^f-COO-R^g$ in which:

· the $R^d$ and $R^g$ radicals, independently of one another, are chosen from linear or branched alkyl radicals having from 1 to 40 carbon atoms, preferably from 1 to 20 carbon atoms;

the $R^e$ and $R^f$ radicals, independently of one another, are divalent hydrocarbon groups, in particular alkylene groups and preferably $-CH_2-CH_2-$.

**14.** Use according to Claim 13, **characterized in that** the composition comprises pentaerythritol tetra(laurylthiopropionate).

**15.** Use according to Claim 13, **characterized in that** the composition comprises an HALS hindered amine of N-OR type, preferably comprising at least one group:

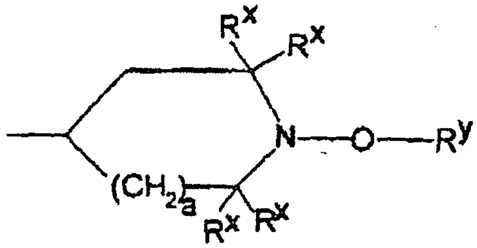

in which $R^y$ is hydrogen or a linear or branched $C_1$ to $C_{18}$ alkyl, optionally substituted by one or more phenyl groups, or a $C_5$ to $C_6$ cycloalkyl or benzyl, a is 0 or 1, preferably 1, and the $R^x$ radicals, which are identical to or different from one another, are chosen from linear or branched $C_1$ to $C_3$ alkyl, phenyl and benzyl radicals.

**16.** Use according to Claim 15, **characterized in that** the composition comprises a sebacate, in particular of formula:

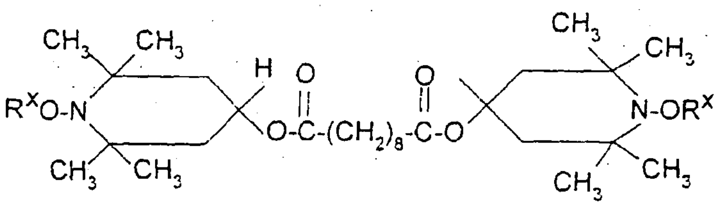

the $R^x$ radicals, which are identical to or different from one another, being chosen from linear or branched $C_1$ to $C_3$ alkyl, phenyl and benzyl radicals.

**17.** Use according to Claim 16, **characterized in that** the composition comprises bis (1-octyloxy-2, 2, 6, 6-tetramethyl-4-piperidyl) sebacate.

**18.** Use According to any one of Claims 1 to 17 for the stabilization of the constituent silicone elastomers of moulds intended for the moulding of polyester items in order to prevent, within the silicone elastomer, the polymerization of the styrene resulting from the polyester resin, without harming the polymerization at the core and at the surface of the polyester.

**19.** Use according to any one of Claims 1 to 18, **characterized in that** it makes it possible to obtain a number of moulding

operations per mould which is increased by more than 20% with respect to an additive-free elastomer.

**20.** Precursor silicone composition of a silicone elastomer which can be used for the formation of moulds, in particular of moulds for the moulding of polyester items, **characterized in that** it comprises, as stabilization additive, at least one additive corresponding to the following formula (1) :

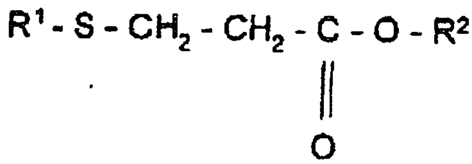

in which $R^1$ and $R^2$ are linear or branched alkyl radicals or cycloaliphatic radicals having from 1 to 40 carbon atoms.

**21.** Silicone composition according to Claim 20, **characterized in that** it comprises one or more additives such as described in any one of Claims 2 to 5, 7 and 9, optionally in combination with an additive such as described in any one of Claims 12 to 17.

**22.** Composition according to Claim 20 or 21, **characterized in that** the additive is employed at between 0.1 and 15% by weight with respect to the silicone composition.

**23.** Composition according to Claim 20 or 21, **characterized in that** the additive is employed at between 0.2 and 10%, preferably between 0.5 and 5%, by weight with respect to the silicone composition.

**24.** Composition according to any one of Claims 20 to 23, **characterized in that** it comprises:

- (A) a diorganopolysiloxane oil exhibiting reactive groups chosen from i) condensable, hydrolysable or hydroxyl terminal groups and 2i) alkenyl groups, preferably vinyl groups, bonded to silicon;
- (B) optionally a compound chosen from the group consisting of silanes comprising condensable or hydrolysable groups, in the case where (A) is chosen from the groups i), and of diorganopolysiloxane oil carrying hydrogen atoms, in the case where (A) is chosen from the groups 2i);
- (C) a catalyst;
- (D) optionally any other additive conventionally used in the type of composition under consideration.

**Patentansprüche**

**1.** Verwendung, zur Erhöhung der Haltbarkeit der Pressformen, die aus elastomerem Silikon hergestellt sind, das durch Polyadditions- oder Polykondensationsreaktion vernetzt wird, von Additiv, das in der Lage ist, das Silikonelastomer, das die Pressform aufbaut, gegenüber zu formenden Substanzen zu stabilisieren, wobei das Additiv der folgenden Formel (1) gehorcht:

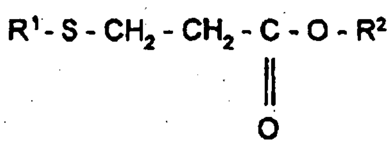

wobei $R^1$ und $R^2$ lineare oder verzweigte Alkylreste oder cycloaliphatische Reste mit 1 bis 40 Kohlenstoffatomen sind.

**2.** Verwendung nach Anspruch 1, **dadurch gekennzeichnet, dass** $R^1$ und $R^2$ so sind, dass $R^1 + R^2 \leq 20$ C-Atome, vorzugsweise $6 \leq R^1 + R^2 \leq 20$ C-Atome gilt.

**3.** Verwendung nach Anspruch 2, **dadurch gekennzeichnet, dass** $6 \leq R^1 + R^2 \leq 18$ C-Atome, vorzugsweise $8 \leq R^1 + R^2 \leq 18$ C-Atome gilt.

**4.** Verwendung nach Anspruch 2, **dadurch gekennzeichnet, dass** $10 \leq R^1 + R^2 \leq 18$ C-Atome gilt.

**5.** Verwendung nach Anspruch 4, **dadurch gekennzeichnet, dass** das Additiv Methyllaurylthiopropionat LTPMe einschließt:

$C_{12}H_{25}$-S-$CH_2$-$CH_2$-CO-O-$CH_3$-

**6.** Verwendung nach einem der Ansprüche 2 bis 5 für das Pressformen von Gegenständen mit wenig ausgeprägten Einzelheiten.

**7.** Verwendung nach Anspruch 1, **dadurch gekennzeichnet, dass** $R^1$ und $R^2$ so sind, dass $R^1 + R^2 > 20$ C-Atome gilt.

**8.** Verwendung nach Anspruch 7 zum Formen von Gegenständen, die Tiefen- oder Dickereliefs von größer als oder gleich Millimeter und einer Größe oder eines Durchmesser von unterhalb von 1 bis 5 mm aufweisen.

**9.** Verwendung nach Anspruch 1, **dadurch gekennzeichnet, dass** ein Additiv, wie in einem der Ansprüche 2 bis 5 beschrieben, und ein Additiv, wie in Anspruch 7 beschrieben, eingesetzt werden.

**10.** Verwendung nach einem der Ansprüche 1 bis 9, **dadurch gekennzeichnet, dass** das Additiv zwischen 0,1 und 15 Gew.-% bezüglich der gesamten Silikonzusammensetzung eingesetzt wird.

**11.** Verwendung nach Anspruch 10, **dadurch gekennzeichnet, dass** das Additiv zwischen 0,2 und 10 %, vorzugsweise zwischen 0,5 und 5 Gew.-% bezüglich der Silikonzusammensetzung eingesetzt wird.

**12.** Verwendung nach einem der Ansprüche 1 bis 11, **dadurch gekennzeichnet, dass** die Zusammensetzung ein weiteres Stabilisationsadditiv einschließt.

**13.** Verwendung nach Anspruch 12, **dadurch gekennzeichnet, dass** das andere Additiv aus der Gruppe ausgewählt ist, die besteht aus:

- Phosphiten,
- sterisch gehinderten Phenolen,
- aromatischen Aminen, sterisch gehinderten HALS-Aminen,
- metallischen Thiophosphaten,
- Metallsalzen mit oxidativer Wirkung,
- Additiven, die in ihrer Struktur mindestens 2, vorzugsweise 4 Gruppen der Formel

  - $R^a$-OOC-$R^b$-S-$R^c$
  einschließen, wobei

  • die Reste $R^a$ unabhängig voneinander aus den zweiwertigen Kohlenwasserstoffgruppen mit 1 bis 6 Kohlenstoffatomen, vorzugsweise linearen oder verzweigten Alkylenen, insbesondere linearen Alkylenen, insbesondere mit 1 bis 4 Kohlenstoffatomen, vorzugsweise 1 und 2 Kohlenstoffatomen ausgewählt sind;
  • die Reste $R^b$ einwertige Kohlenwasserstoffgruppen, insbesondere Alkylene und vorzugsweise -$CH_2$-$CH_2$- sind;
  • die Reste $R^c$ aus den Alkylen mit 1 bis 40 Kohlenstoffatomen, vorzugsweise 1 bis 20 Kohlenstoffatomen ausgewählt sind, und

- Additiven der Formel $R^d$-OOC-$R^e$-S-$R^f$-COO-$R^g$, wobei:

  • die Reste $R^d$ und $R^g$ unabhängig voneinander aus linearen oder verzweigten Alkylresten mit 1 bis 40 Kohlenstoffatomen, vorzugsweise 1 bis 20 Kohlenstoffatomen ausgewählt sind;
  • die Reste $R^e$ und $R^f$ unabhängig voneinander zweiwertige Kohlenwasserstoffgruppen, insbesondere Alkylene, vorzugsweise -$CH_2$-$CH_2$- sind.

**14.** Verwendung nach Anspruch 13, **dadurch gekennzeichnet, dass** die Zusammensetzung Pentaerythrittetra(laurylthiopropionat) einschließt.

**15.** Verwendung nach Anspruch 13, **dadurch gekennzeichnet, dass** die Zusammensetzung ein gehindertes HALS-Amin vom Typ N-OR einschließt, das vorzugsweise mindestens eine Gruppe:

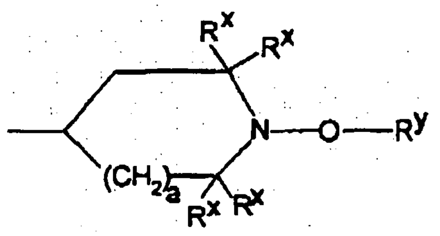

einschließt, wobei $R^y$ Wasserstoff oder ein lineares oder verzweigtes C1- bis C18-Alkyl, gegebenenfalls substituiert mit einer oder mehreren Phenylgruppe(n) oder einem C5- bis C6-Cycloalkyl oder Benzyl, ist, a 0 oder 1 ist, vorzugsweise 1 ist, die Reste $R^x$, die gleich oder verschieden voneinander sind, unter den linearen oder verzweigten C1- bis C3-Alkylresten, Phenylresten und Benzylresten ausgewählt sind.

**16.** Verwendung nach Anspruch 15, **dadurch gekennzeichnet, dass** die Zusammensetzung ein Sebacat, insbesondere der Formel:

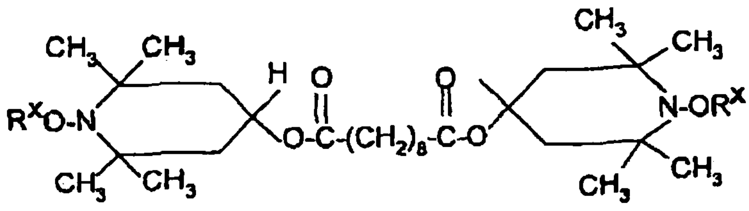

einschließt, wobei die Reste $R^x$, die gleich oder verschieden voneinander sind, aus linearen oder verzweigten C1- bis C3-Alkyl-, Phenyl- und Benzylresten ausgewählt sind.

**17.** Verwendung nach Anspruch 16, **dadurch gekennzeichnet, dass** die Zusammensetzung Bis(1-octyloxy-2,2,6,6-tetramethyl-4-piperidyl)sebacat einschließt.

**18.** Verwendung nach einem der Ansprüche 1 bis 17 zur Stabilisation der konstitutiven Silikon-Elastomeren von Formen, die zum Pressformen von Polyesterteilen bestimmt sind, um in dem Silikonelastomer die Polymerisation des Styrols zu verhindern, das sich von dem Polyesterharz ableitet, ohne die Polymerisation im Zentrum und an der Oberfläche des Polyesters zu beeinträchtigen.

**19.** Verwendung nach einem der Ansprüche 1 bis 18, **dadurch gekennzeichnet, dass** sie, bezüglich eines Elastomers ohne Additiv, den Erhalt einer um über 20 % gestiegenen Anzahl von Formvorgängen pro Pressform erlaubt.

**20.** Silikon-Vorläuferzusammensetzung von Silikonelastomer, die zum Aufbau von Pressformen, insbesondere von Pressformen zur Formung von Polyesterteilen, verwendbar ist, **dadurch gekennzeichnet, dass** sie als Stabilisationsadditiv mindestens ein Additiv einschließt, das der folgenden Formel (1) gehorcht:

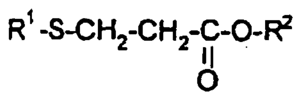

wobei $R^1$ und $R^2$ lineare oder verzweigte Alkylreste oder cycloaliphatische Reste mit 1 bis 40 Kohlenstoffatomen sind.

**21.** Silikonzusammensetzung nach Anspruch 20, **dadurch gekennzeichnet, dass** sie ein oder mehrere Additive, wie in einem der Ansprüche 2 bis 5, 7 und 9 beschrieben, gegebenenfalls in Kombination mit einem Additiv, wie in einem der Ansprüche 12 bis 17 beschrieben, einschließt.

**22.** Zusammensetzung nach Anspruch 20 oder 21, **dadurch gekennzeichnet, dass** das Additiv zwischen 0,1 und 15 Gew.-% bezüglich der Silikonzusammensetzung eingesetzt wird.

**23.** Zusammensetzung nach Anspruch 20 oder 21, **dadurch gekennzeichnet, dass** das Additiv zwischen 0,2 und 10 %, vorzugsweise zwischen 0,5 und 5 Gew.-% bezüglich der Silikonzusammensetzung eingesetzt wird.

**24.** Zusammensetzung nach einem der Ansprüche 20 bis 23, **dadurch gekennzeichnet, dass** es umfasst:

- (A) ein Diorganopolysiloxanöl, das reaktive Gruppen aufweist, die ausgewählt sind aus i) terminalen kondensierbaren hydrolysierbaren Hydroxygruppen, und 2i) Alkenylgruppen, vorzugsweise Vinylgruppen, die an das Silicium gebunden sind;
- (B) gegebenenfalls eine Verbindung, ausgewählt aus der Gruppe, bestehend aus Silanen mit kondensierbaren oder hydrolysierbaren Gruppen in dem Fall, indem (A) aus den Gruppen i) ausgewählt ist, und aus Diorganopolysiloxanöl, das Wasserstoffatome trägt, in dem Fall, indem (A) aus den Gruppen 2i) gewählt ist;
- (C) einen Katalysator;
- (D) gegebenenfalls jedes andere Additiv, das üblicherweise in dem Typ von betrachteter Zusammensetzung verwendet wird.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- EP 787766 A
- FR 2773165 A
- EP 854167 A
- FR 1134005 A
- FR 1198749 A
- FR 1226745 A
- FR 1126411 A
- FR 1179969 A
- FR 1189216 A
- FR 1248826 A
- FR 1314649 A
- FR 1423477 A
- FR 1432799 A
- FR 2067636 A
- WO 9858997 A
- FR 9816510
- US 3035016 A
- US 3077465 A
- US 3133891 A
- US 3409573 A
- US 3438930 A
- US 3647917 A
- US 3886118 A
- US 3065194 A
- US 3542901 A
- US 3689454 A
- US 3779986 A
- GB 2052540 A
- US 4417042 A
- EP 69256 A
- US 3378520 A
- US 3364160 A
- US 3417047 A
- US 3742004 A
- US 3758441 A
- US 3922246 A
- US 3956280 A
- US 4143088 A
- US 3678002 A
- US 3888815 A
- US 3933729 A
- US 4064096 A
- GB 2032936 A
- US 3186963 A
- US 3862919 A
- BE 842305 A
- US 3220972 A
- US 3284406 A
- US 3436366 A
- US 3697473 A
- US 4340709 A
- US 3159601 A
- US 3159602 A
- EP 57459 A
- EP 188978 A
- EP 190530 A
- US 3419593 A
- US 3715334 A
- US 3377432 A
- US 3814730 A
- GB 1421136 A
- GB 1419769 A
- US 3445420 A
- US 3989667 A
- EP 432096 A
- FR 773165 A


### Littérature non-brevet citée dans la description


- **NOLL.** Chemistry and Technology of Silicones. Academic Press, 1968, 337
- **MARTIN DEXTER.** Antioxydants, Encyclopedia of Chemical Technology. 1990, vol. 3, 424-447